# EUROPÄISCHE PATENTANMELDUNG

(11) **EP 1 462 686 A1**
(43) Veröffentlichungstag der Anmeldung: **29.09.2004**
(21) Anmeldenummer: 04004297.0
(22) Anmeldetag: 26.02.2004
(51) Int. Cl.: F16J 15/32

(54) **Dichtring**

(30) Priorität: 27.03.2003 DE 10313958
(71) Anmelder: Carl Freudenberg KG, 69469 Weinheim (DE)
(72) Erfinder: Guillerme, Celine, 52360 Neuilly L'evèque (FR); Kammerer, Eric, 52200 Langres (FR)

(57) **Zusammenfassung**

Dichtring, umfassend einen Tragring (1) mit einem Radialflansch (2) und eine Dichtmanschette (3), die an ihrem freien Ende (5) mit einer verdickten, umlaufenden Wulst (6) verbunden ist.

## Beschreibung

### Technisches Gebiet

Die Erfindung betrifft einen Dichtring gemäß dem Oberbegriff von Patentanspruch 1.

### Stand der Technik

Ein solcher Dichtring ist aus der DE 100 33 446 A1 bekannt. Der Dichtring umfasst einen Tragring bestehend aus einem Axialflansch und einem Radialflansch sowie einer Dichtmanschette, die an dem Tragring festgelegt ist. Zur Abdichtung des Gehäuses ist an dem Axialflansch des Tragrings ein Dichtbereich aus elastomerem Werkstoff anvulkanisiert. In die Dichtmanschette ist auf der der Welle zugewandeten Seite zumindest eine Rückfördernut zur Rückförderung des abzudichtenden Mediums in Richtung des abzudichtenden Raums eingebracht. Die Dichtmanschette besteht aus einem Elastomerwerkstoff und ist von ihrem Anbindungsbereich am Tragring bis zu ihrem freien Ende im Wesentlichen gleich ausgebildet. Das freie Ende wird ausschließlich durch die Elastizität des Elastomerwerkstoffs an die abzudichtende Oberfläche des abzudichtenden Maschinenelements angepresst. Durch eine geringe Anpresskraft soll die Lebensdauer der Dichtmanschette erhöht werden.

### Darstellung der Erfindung

Der Erfindung liegt die Aufgabe zugrunde, einen Dichtring mit Dichtmanschette der eingangs genannten Art derart weiterzuentwickeln, dass die Dichtmanschette unabhängig davon, in welcher Richtung ihr freies Ende vorgewölbt ist, mit erhöhter Anpresskraft an der Oberfläche des abzudichtenden Maschinenelementes anliegt und dass der Dichtring einfach und kostengünstig herstellbar ist. Die Gefahr einer fehlerhaften Montage soll auf ein Minimum reduziert werden.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Dichtmanschette an ihrem freien Ende mit einer verdickten, umlaufenden Wulst verbunden ist.
Die erfindungsgemäße Wulst erhöht die radiale Anpressung am freien Ende der Dichtmanschette auf die abzudichtende Welle und verhindert eine Leckage des abzudichtenden Mediums insbesondere dann, wenn das freie Ende der Dichtmanschette in Richtung der Umgebung vorgewölbt ist und der abzudichtende Raum druckbeaufschlagt ist. Die Dichtmanschette hebt durch die Wulst auch dann nicht von der abzudichtenden Oberfläche ab. Die Wulst ist so ausgelegt, dass der konstruktiv vorgesehene Dichtbereich der Dichtmanschette in allen zulässigen Betriebszuständen immer auf der Welle aufliegt. Durch den einfachen Aufbau ist der Dichtring einfach zu montieren. Einer Ringwendelfeder bedarf es nicht.

Bevorzugt besteht die Wulst aus einem elastomeren Werkstoff, da diese Werkstoffe die radiale Anpresskraft auf eine abzudichtende Welle aufgrund ihrer Gummielastizität bewirken.

Vorteilhaft ist die Festlegung der Dichtmanschette am Radialflansch des Tragrings über eine elastomere Zwischenschicht. Durch die elastomere Zwischenschicht können Dichtmanschetten auch aus porösen Werkstoffen einfach am Tragring befestigt werden.

In einer vorteilhaften Ausgestaltung hat die Dichtmanschette auf ihrer der abzudichtenden Welle abgewandten Seite einen umfangsseitig umlaufenden, flachen Überzug. An der Zwischenschicht und dem Überzug kann die Dichtmanschette festgelegt werden. Insbesondere wenn die Dichtmanschette aus einem selbstschmierenden Werkstoff wie PTFE besteht, der schlecht haftfähig ist, ist eine solche Ausgestaltung von Vorteil. Der Überzug ist so dünn ausgeführt, dass er die radiale Anpressung des Dichtrings nur unwesentlich beeinflusst, da die radiale Anpressung überwiegend über die Wulst erfolgen soll, um die optimale Anpressung des Dichtbereiches zu gewährleisten.

In einer Ausgestaltung kann der Überzug mit über dem Umfang verteilten Rippen versehen sein. Die Rippen vergrößern die Oberfläche des Überzugs auf der der Welle abgewandten Seite der Dichtmanschette wodurch die Abfuhr der Reibungswärme verbessert wird.

In einer weiteren vorteilhaften Ausgestaltung kann der Überzug diffusionsdicht ausgeführt sein. Das ist insbesondere vorteilhaft wenn die Dichtmanschette aus porösen Werkstoffen besteht und die Dichtmanschette sehr dünn ausgeführt ist. Die Dichtmanschette kann dann auf der der Welle abgewandten Seite mit einem diffusionsdichten Überzug verbunden sein wodurch die Diffusion durch die Dichtmanschette unterbunden wird.

Vorteilhaft ist die Ausführung der Wulst und des Überzugs einstückig und materialeinheitlich. Bei der einteiligen Herstellung von Wulst und Übedauf erleichtern die Rippen des Überzugs die Herstellung der Wulst aufgrund des durch die Rippen vergrößerten Querschnitts, der als Fließquerschnitt zur Herstellung der Wulst genutzt wird. Durch die einteilige Ausführung von Wulst und Überzug kann die Wulst am Tragring gesichert werden.

Bevorzugt ist die Wulst adhäsiv mit der Dichtmanschette verbunden. Durch die adhäsive Verbindung wird radiale Anpresskraft von der Wulst auf das freie Ende der Dichtmanschette übertragen. Dadurch wird die Dichtmanschette mit ihrem Dichtbereich mit einer durch die Wulst definierten Anpresskraft auf die abzudichtende Welle gepresst.

Die bevorzugten Größenverhältnisse der Wulst liegen bei einem Verhältnis der Höhe der Wulst zur Dicke des Überzugs von mindestens 4 und/oder einem Verhältnis von Höhe zu Breite der Wulst 0,5 bis 5. Bei diesen Größenverhältnissen kann die für alle Anwendungsfälle erforderliche Anpresskraft bei gleichzeitig geringem Materialbedarf erreicht werden.

In einer vorteilhaften Ausgestaltung weist die Wulst auf der der Welle zugewandten Seite zumindest einen lippenförmigen, sich radial nach innen erstreckenden Vorsprung auf, der in sich geschlossen ausgebildet ist und der die Welle dichtend umschließt. Ein solcher Vorsprung vermindert im Gegensatz zu einem flächig aufliegenden Vorsprung durch linienförmige Anpressung die Reibung der Wulst.

Bevorzugt weist die Dichtmanschette auf ihrer der Welle zugewandten Seite zumindest eine Rückfördernut zur Rückförderung des abzudichtenden Mediums in Richtung des abzudichtenden Raums auf. Durch die Rückfördernut verbessert sich die dynamische Dichtheit des Dichtrings und die Dichtmanschette wird stets ausreichend geschmiert, wobei das Schmiermittel durch das abzudichtende Medium gebildet und durch den Rückfördereffekt ständig erneuert wird.

In einer vorteilhaften Ausgestaltung kann durch eine geschlossen kreisförmige Anordnung des Vorsprungs der Wulst die Rückfördernut am freien Ende der Dichtmanschette verschlossen sein. Die geschlossene Ausführung des Vorsprungs verhindert eine Leckage des abzudichtenden Mediums bei Stillstand der abzudichtenden Welle. In der Regel sind Tiefe, Querschnitt und Steigung der Rückfördernut entlang der Dichtmanschette konstant. Es ist aber auch möglich, dass die Tiefe, die Steigung und/oder die Breite der Rückfördernut über den Verlauf der Dichtmanschette variabel ist.

Bevorzugt weist der Tragring einen Axialflansch auf, der mit dem Radialflansch auf der der Welle radial abgewandten Seite verbunden ist wobei der Axialflansch außenumfangsseitig von einem statischen Dichtbereich umschlossen ist. Der statische Dichtbereich stellt die Abdichtung des Dichtrings gegenüber einem Gehäuse sicher.

In einer vorteilhaften Ausgestaltung bestehen der Überzug und der statische Dichtbereich aus einem elastomeren Werkstoff. Elastomere Werkstoffe ermöglichen durch gummielastisches Verhalten das Ausgleichen von Fertigungstoleranzen wodurch beispielsweise das Gehäuse und/oder der Tragring des Dichtrings preiswerter gefertigt werden kann.

Bevorzugt sind der Überzug, der statische Dichtbereich und die Wulst einstückig und materialeinheitlich ausgebildet. Das ermöglicht eine Herstellung dieser Teile in einem Arbeitsgang und ein möglicherweise fehlerhaftes Zusammenfügen dieser Teile entfällt.

In einer anderen Ausgestaltung bestehen der Überzug und die Wulst aus einem anderen elastomeren Werkstoff als der statische Dichtbereich, dadurch können Werkstoffe ausgewählt werden, die jeweils für die speziellen Betriebsanforderungen optimiert sind. Der Überzug ist vorzugsweise glatt. Er kann aber auch gewellt ausgeführt sein.

Bevorzugt besteht die Dichtmanschette aus einem PTFE-Compound. Die Dichtmanschette ist dadurch gegen die meisten abzudichtenden Medien resistent. Außerdem weisen PTFE-Werkstoffe eine gute Temperaturbeständigkeit, ein gutes Gleitverhalten und ausgezeichnete Notlaufeigenschaften auf. Eine Dichtmanschette aus PTFE ist nahezu verschleißfrei.

In einer Ausgestaltung kann die Dichtmanschette in Richtung der Umgebung vorgewölbt ist sein. Diese Anordnung ermöglicht eine einfache Montage des Dichtrings ohne Einsatz einer Montagevorrichtung. Durch die Wulst wird diese Montageausrichtung auch bei höheren Mediendrücke ermöglicht.

In einer weiteren Ausführung kann die Dichtmanschette in Richtung des abzudichtenden Raums vorgewölbt sein. Diese Montageausrichtung erlaubt höhere mediumseitige Drücke als bei der Ausrichtung der Dichtmanschette in Richtung der Umgebung.

### Kurzbeschreibung der Zeichnung

Nachfolgend werden anhand der Figuren 1 bis 4 Ausführungsbeispiele der erfindungsgemäßen Dichtung näher erläutert. Diese zeigen, jeweils in schematischer Darstellung:
Fig. 1 ein Ausführungsbeispiel des erfindungsgemäßen Dichtrings in längsgeschnittener Darstellung
Fig. 2 ein Ausführungsbeispiel des erfindungsgemäßen Dichtrings mit voneinander unterschiedlichen Werkstoffen für Überzug mit Wulst und statischem Dichtbereich
Fig. 3 ein Ausführungsbeispiel des erfindungsgemäßen Dichtrings ohne über den Umfang verteilten am Überzug angebrachter Rippen
Fig. 4 ein Ausführungsbeispiel des erfindungsgemäßen Dichtrings in einer Ausgestaltung ohne Axialflansch mit Gehäuseverschlussdeckel

### Ausführung der Erfindung

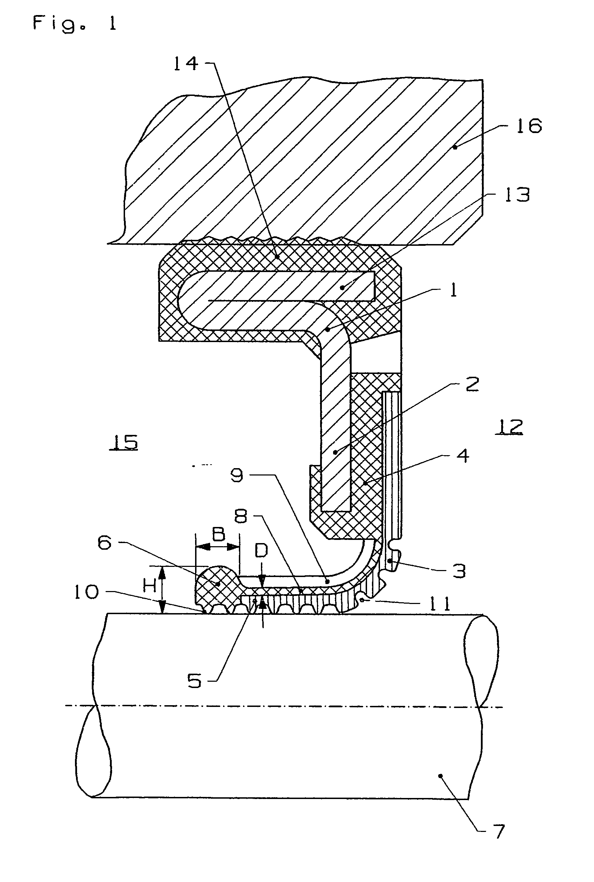

Figur 1 zeigt einen Dichtring, umfassend einen metallischen Tragring 1, mit einem Axialflansch 13 und einem Radialflansch 2, einer Dichtmanschette 3, an dessen freiem Ende 5 eine umfangsseitig umlaufende Wulst 6 adhäsiv befestigt ist. Die Dichtmanschette 3, die in diesem Ausführungsbeispiel aus PTFE besteht, wird über eine elastomere Zwischenschicht 4 am Tragring 1 festgelegt. Die Dichtmanschette 3 ist in Richtung der Umgebung 15 vorgewölbt. Auf der einer abzudichtenden Welle 7 zugewandten Seite der Dichtmanschette 3 befindet sich eine Rückfördernut 11 in bekannter Ausführung in Bezug auf Steigung, Querschnitt und Gangzahl. Auf der der Welle 7 abgewandten Seite der Dichtmanschette 3 ist ein flacher, umfangsseitig umlaufender Überzug 8 aus elastomerem Werkstoff mit gleichmäßig über den Umfang verteilten Rippen 9 mit der Dichtmanschette 3 verbunden. Am freien Ende 5 der Dichtmanschette 3 geht der Überzug in eine umfangsseitig umlaufende, verdickte Wulst 6 über. Dabei sind Wulst 6 und Überzug 8 materialeinheitlich und einstückig ausgebildet. Das Verhältnis der Höhe H der Wulst 6 zur Dicke D des Überzugs 8 beträgt 10 und das Verhältnis von Höhe H zu Breite B der Wulst 6 beträgt 2,5. Die der Welle 7 zugewandte Seite der Wulst 6 weist zumindest einen die Welle 7 konzentrisch umschließenden Vorsprung 10 auf, der durch umfangsseitig kreisförmig geschlossene Ausführung die Rückfördernut 11 der Dichtmanschette 3 versperrt.
Zur Abdichtung des Dichtrings im Gehäuse 16 ist am Axialflansch 13 des Tragrings 1 ein statischer Dichtbereich 14, bestehend aus einer Schicht aus elastomerem Werkstoff, anvulkanisiert. Der statische Dichtbereich 14 ist einstückig und materialeinheitlich mit Überzug 8 und Wulst 6 hergestellt.

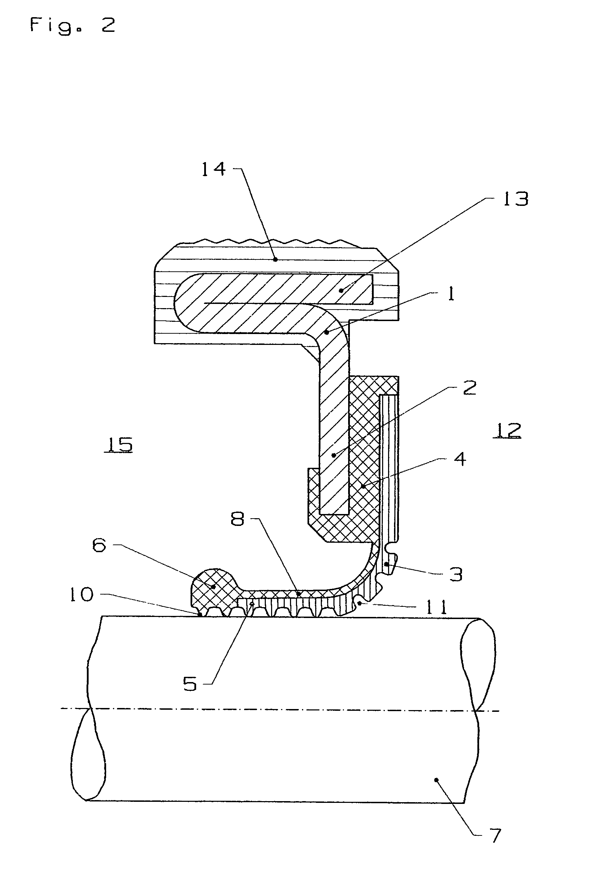

Figur 2 zeigt eine weitere Ausgestaltung des Dichtrings. In dieser Ausgestaltung unterscheidet sich der elastomere Werkstoff für Wulst 6 und Überzug 8 vom elastomeren Werkstoff für den statischen Dichtbereich 14.

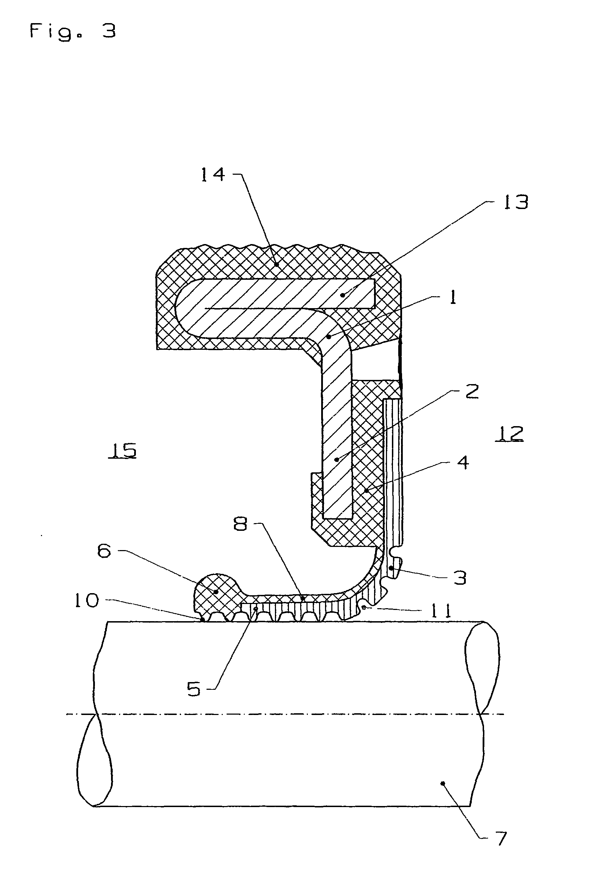

Figur 3 zeigt eine Ausgestaltung des Dichtrings bei der der Überzug 8 keine Rippen aufweist.

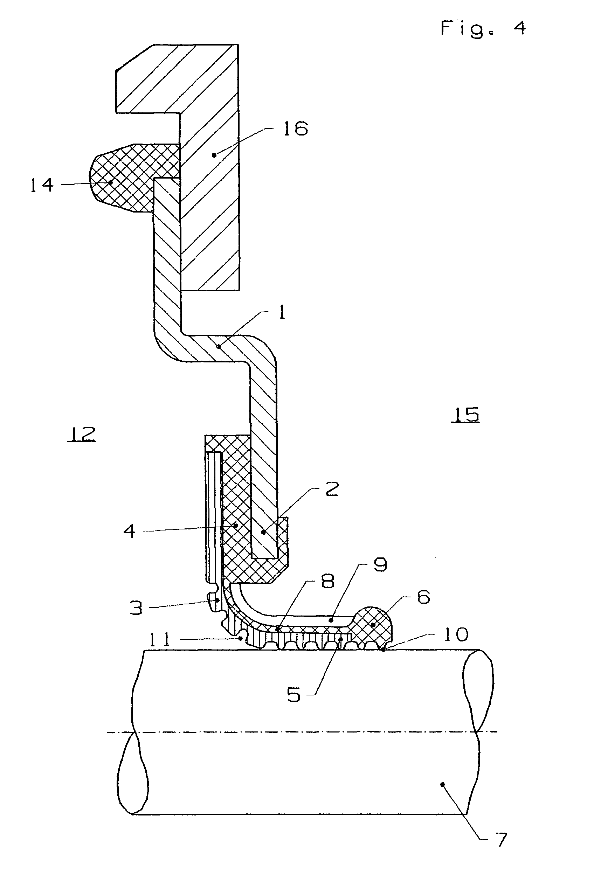

Figur 4 zeigt schematisch eine Ausgestaltung des Dichtrings nach Figur 1 mit einem modifizierten Tragring 1 ohne Axialflansch montiert in einem Gehäuseverschlussdeckel 16.

## Patentansprüche

1. Dichtring, umfassend einen Tragring mit einem Radialflansch und eine Dichtmanschette, **dadurch gekennzeichnet, dass**
die Dichtmanschette (3) an ihrem freien Ende (5) mit einer verdickten, umlaufenden Wulst (6) verbunden ist.

2. Dichtring nach Anspruch 1, **dadurch gekennzeichnet, dass** die Wulst (6) aus einem polymeren Werkstoff besteht.

3. Dichtring nach einem der Ansprüche 1 oder 2, **dadurch gekennzeichnet, dass** die Dichtmanschette (3) über eine elastomere Zwischenschicht (4) am Radialflansch (2) des Tragrings (1) festgelegt ist

4. Dichtring nach einem der Ansprüche 1 bis 3, **dadurch gekennzeichnet, dass** die Dichtmanschette (3) auf ihrer einer abzudichtenden Welle (7) radial abgewandten Seite einen umfangsseitig umlaufenden, flachen Überzug (8) hat.

5. Dichtring nach einem der Ansprüche 1 bis 4, **dadurch gekennzeichnet, dass** die Zwischenschicht (4) und der Überzug (8) einstückig und materialeinheitlich sind.

6. Dichtring nach einem der Ansprüche 4 oder 5, **dadurch gekennzeichnet, dass** der Überzug (8) mit über den Umfang verteilten Rippen (9) versehen ist.

7. Dichtring nach einem der Ansprüche 4 bis 6, **dadurch gekennzeichnet, dass** der Überzug (8) diffusionsdicht ist.

8. Dichtring nach einem der Ansprüche 4 bis 7, **dadurch gekennzeichnet, dass** der Überzug (8) und die Wulst (6) einstückig und materialeinheitlich ausgebildet sind.

9. Dichtring nach einem der Ansprüche 1 bis 8, **dadurch gekennzeichnet, dass** die Wulst (6) mit dem freien Ende (5) der Dichtmanschette (3) adhäsiv verbunden ist.

10. Dichtring nach einem der Ansprüche 1 bis 9, **dadurch gekennzeichnet, dass** das Verhältnis der Höhe (H) der Wulst (6) zur Dicke (D) des Überzugs mindestens 4 und/oder das Verhältnis von Höhe (H) zu Breite (B) der Wulst (6) 0,5 bis 5 beträgt.

11. Dichtring nach einem der Ansprüche 1 bis 10, **dadurch gekennzeichnet, dass** die Wulst (6) zumindest einen lippenförmigen, sich radial nach innen erstreckenden Vorsprung (10) aufweist, der in sich geschlossen ausgebildet ist und die Welle (7) dichtend umschließt.

12. Dichtring nach einem der Ansprüche 1 bis 11, **dadurch gekennzeichnet, dass** die Dichtmanschette (3) auf ihrer der Welle (7) radial zugewandten Seite zumindest eine Rückfördernut (11) zur Rückförderung des abzudichtenden Mediums in Richtung des abzudichtenden Raums (12) aufweist.

13. Dichtring nach Anspruch 12, **dadurch gekennzeichnet, dass** die Tiefe und/oder die Breite und/oder die Steigung der Rückfördernut entlang der Dichtmanschette variabel ist.

14. Dichtring nach einem der Ansprüche 11 oder 13, **dadurch gekennzeichnet, dass** der Vorsprung (10) die Rückfördernut (11) am freien Ende (5) der Dichtmanschette (3) dichtend verschließt.

15. Dichtring nach einem der Ansprüche 1 bis 14, **dadurch gekennzeichnet, dass** der Tragring (1) einen Axialflansch (13) aufweist, der mit dem Radialflansch (2) auf der der Welle (7) radial abgewandten Seite verbunden ist und dass der Axialflansch (13) außenumfangsseitig von einem statischen Dichtbereich (14) umschlossen ist.

16. Dichtring nach einem der Ansprüche 4 bis 15, **dadurch gekennzeichnet, dass** der Überzug (8) und der statische Dichtbereich (14) jeweils aus einem polymeren Werkstoff bestehen.

17. Dichtring nach einem der Ansprüche 4 bis 16, **dadurch gekennzeichnet, dass** der Überzug (8) und der statische Dichtbereich (14) einstückig und materialeinheitlich ausgebildet sind.

18. Dichtring nach einem der Ansprüche 4 bis 16, **dadurch gekennzeichnet, dass** der Überzug (8) und der statische Dichtbereich (14) voneinander verschiedene Werkstoffe enthalten.

19. Dichtring nach einem der Ansprüche 1 bis 18, **dadurch gekennzeichnet, dass** die Dichtmanschette (3) aus einem PTFE-Compound besteht.

20. Dichtring nach einem der Ansprüche 1 bis 19, **dadurch gekennzeichnet, dass** das freie Ende (5) der Dichtmanschette (3) axial in Richtung des abzudichtenden Raums (12) vorgewölbt ist.

21. Dichtring nach einem der Ansprüche 1 bis 19, **dadurch gekennzeichnet, dass** das freie Ende (5) der Dichtmanschette (3) axial in Richtung der Umgebung (15) vorgewölbt ist.

22. Gehäuseverschlussdeckel, umfassend einen Dichtring nach mindestens einem der Ansprüche 1 bis 21, der in den Gehäuseverschlussdeckel integriert ist.
